# EUROPEAN PATENT SPECIFICATION

(11) **EP 2 878 291 B1**
(45) Date of publication and mention of the grant of the patent: **15.08.2018**
(21) Application number: 12881566.9
(22) Date of filing: 31.12.2012
(51) Int. Cl.: A61H 19/00, A61H 23/02, G06F 3/033

(54) **MOUSE WHEEL TYPE SEXUAL MASSAGER**
SEXUALMASSAGEVORRICHTUNG MIT EINEM MAUSRAD
MASSEUR SEXUEL DU TYPE À MOLETTE DE SOURIS

(30) Priority: 24.07.2012 CN 201220359762 U
(43) Date of publication of application: 03.06.2015
(73) Proprietor: Lover Health Science And Technology Co., Ltd, Huzhou, Zhejiang 313100 (CN)
(72) Inventor: WU, Wei, Huzhou City Zhejiang 313100 (CN)
(74) Representative: Jöstingmeier, Martin
(86) International application number: PCT/CN2012/088151
(87) International publication number: WO 2014/015641

(56) References cited:
- EP-A2- 0 817 351
- WO-A1-2008/086424
- WO-A2-2011/028576
- CA-A1- 2 722 679
- CN-A- 102 743 275
- CN-U- 202 682 310
- CN-Y- 2 829 709
- DE-U1-202004 008 234
- FR-A1- 2 812 425
- GB-A- 2 220 857
- JP-A- 2002 014 769
- US-A1- 2009 118 650
- US-A1- 2011 009 693
- US-S1- D 476 087

## Description

### FIELD OF INVENTION

The present invention relates to the field of sexual massage device, and, more particularly, to a sexual massage device with wheel type controller mechanism structure.

### BACKGROUND

The massaging device s, such as massaging device s used for sexual stimulation by female or male, on the current market usually include a soft rubber leather sheath, which is usually made of soft material, such as rubber, a potentiometer and a rotary potentiometer switch. The potentiometer is usually disposed at an end of the soft rubber leather sheath. The switch may switch a vibration motor on or off and may adjust the angular velocity of the motor. Such massaging device s may have certain disadvantages. First, a misoperation may occur. Because the potentiometer switch is set to be either on or off, a user may mistakenly switch off the massaging device when the user rotates the switch, which may affect the mood of the user negatively and reduce the effect of massaging. Second, the adjustable levels are limited. A rotary switch can only be adjusted between 0° and 360°, which limits available adjustable levels, and thus it may be difficult to achieve the refined adjustment of the strength of vibration, which is determined by the vibrating speed.

### DESCRIPTION OF THE INVENTION

The present disclosure is directed to a sexual massage device with a wheel type controller mechanism structure as defined in claim 1. The massage device is easy to operate, has unlimited adjustable level for refined adjustment of vibration strength, and has switchable vibration mode.

The present disclosure employs the following technical scheme.

US 2011/0009693 discloses a vibration device, including a set of setting buttons. The setting buttons include a timer on/off button, an hour button and a minute button.

CA 2722679 A discloses a vaginal tissue regeneration device comprising a speed control dial.

WO 2011/028576 A discloses a massage device with three controls formed on a boot, which include '+' control to increase motor speed, '-' control to decreases motor speed upon actuation and mode control.

WO 2008/086424 A discloses a personal massager with are three buttons on the massager which provide control of the massage functions. Two of the buttons each control the speed of a respective motor. A first button controls a first motor, second button controls a second motor and a third button changes the vibration mode or pattern.

The present disclosure is a sexual massage device with at least one wheel type controller structure. The massage device includes a soft rubber leather sheath made of a soft material and vibration motor. A massaging head is disposed at a first end of the soft rubber leather sheath. The massage device also includes a shell body that is formed by attaching a first shell body member and a second shell body member together. The first shell body member and the second shell body member may be attached together through snapping or other appropriate mechanism. The vibration motor is disposed within the shell body. A mounting opening may be disposed at a second end of the soft rubber leather sheath. The shell body may be disposed within the soft rubber leather sheath through the mounting opening. A wheel mechanism may be disposed in the shell body at a location corresponding to the mounting opening. The wheel mechanism includes a roller, a circuit board provided with a switch, and a wheel encoder. The wheel mechanism also includes a rotating shaft disposed perpendicularly to the roller. The rotating shaft may be supported by two shaft holes disposed on the shell body. An elastic ring may be disposed between the rotating shaft and the shaft holes. The circuit board with the switch may be disposed at the back of a first end of the rotating shaft. A second end of the rotating shaft may be transmission connected to the wheel encoder. When the roller is pressed, the first end of the rotating shaft press the switch of the circuit board, which in turn switch on/off the vibration motor and/or change vibrating mode. The roller may be rotated to adjust and control the vibration of the vibration motor through the wheel encoder and the circuit board with the switch.

The first shell body member may be formed by attaching a top first shell body member and a bottom first shell body member through snapping or any appropriate mechanism. The second shell body member may be formed by attaching a top second shell body member and a bottom second shell body member through snapping or any appropriate mechanism. A first supporting member and a second supporting member may be disposed at the front and back of the roller, respectively, to provide rotation space for the roller.

A rechargeable battery may be disposed at the middle of the shell body. A magnetic charging mechanism may be disposed at the bottom of the soft rubber leather sheath.

The present disclosure provides certain advantages. According to the technical scheme as described above, the mounting opening is disposed at the second end of the soft rubber leather sheath. The shell body may be disposed within the soft rubber leather sheath through the mounting opening. The wheel mechanism may be disposed in the shell body at a location corresponding to the mounting opening. The wheel mechanism includes the roller, the circuit board with the switch, and the wheel encoder. The wheel mechanism also includes the rotating shaft disposed perpendicularly to the roller. The rotating shaft may be supported by two shaft holes disposed on the shell body. The elastic ring may be disposed between the rotating shaft and the shaft holes. The circuit board with the switch may be disposed at the back of the first end of the rotating shaft. The second end of the rotating shaft may be transmission connected to the wheel encoder. The structure according to the present disclosure changed the current technology that a sexual massage device is controlled by a potentiometer. The control of the massage device is through the wheel mechanism. The switch on/off of the vibration motor and/or the vibrating mode may be achieved through pressing the roller. The refined adjustment of the vibration motor may be achieved through rotating the roller. The roller of the wheel mechanism may be rotated in two directions and the scope of the level of the adjustment is large. In addition, the strength of the vibration may be strong and without upper limit for the strength level. Further, the accuracy level of the adjustment may reach high level. The digital adjustment technology used in the present disclosure exceeds the function of the potentiometer. The switch on/off of the vibration motor is achieved through the pressing of the roller and the adjustment of the angular velocity of the vibration motor (the higher the angular velocity, the stronger the vibration) is achieved through the rotating of the roller. Such a structure avoids the defect of inadvertent switch off that may occur by using current rotating potentiometer to adjust vibration motor. Thus, a user may not have the emotional fluctuation caused by the inadvertent switch off and concern of operational error. The elastic ring is disposed between the rotating shaft and the shaft hole. The elastic ring is deformed when a force is exerted on the rotating shaft to allow the rotating shaft to press on the circuit board and return to a non-deformed position to lift the rotating shaft from the circuit board when the force on the rotating shaft is removed. The vibration motor is disposed in the shell body and the rotating shaft is disposed in the shaft holes of the shell body. Such a structure may facilitate the removal of the soft rubber leather sheath and the clean of the massage device.

The present disclosure may provide further advantages. The first shell body member may be formed by attaching the top first shell body member and the bottom first shell body member through snapping or any appropriate mechanism. The second shell body member may be formed by attaching the top second shell body member and the bottom second shell body member through snapping or any appropriate mechanism. Such a structure may facilitate the assembling and disassembling of the massage device. Thus, it is convenient to replace and/or clean the parts of the massage device. The first supporting member and the second supporting member may be disposed at the front and back of the roller, respectively, to provide rotation space for the roller. Thus, the rotation of the roller is more flexible.

### DESCRIPTION OF THE DRAWING

Fig. 1 is the schematic diagram of an exemplary structure of the present disclosure;
Fig. 2 is a side cross section view of Fig. 1;
Fig. 3 is a cross section view of the assembly of the wheel mechanism in Fig. 1;
Fig. 4 is a three-dimensional view of the assembly of the wheel mechanism is Fig. 1;
Fig. 5 is an exploded view of the schematic diagram of the three dimensional structure of an exemplary massage device according to the present disclosure;

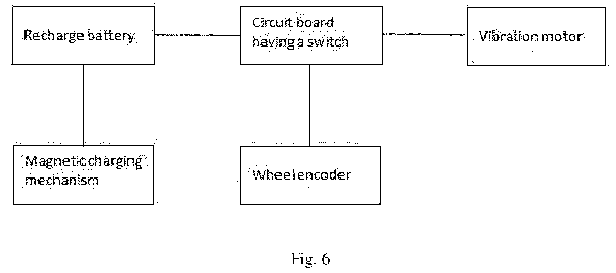

Fig. 6 is the electrical circuit diagram of an exemplary massage device according to the present disclosure;

### DETAILED DESCRIPTION OF THE EMBODIMENTS

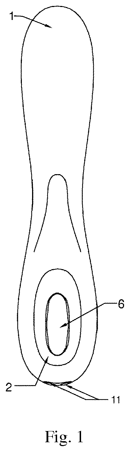

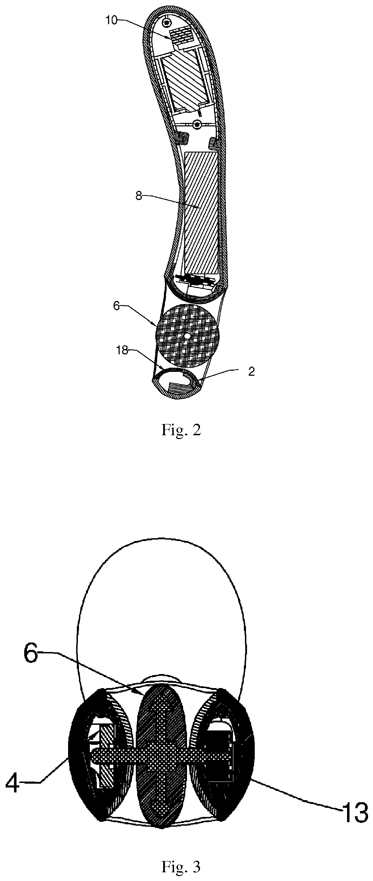

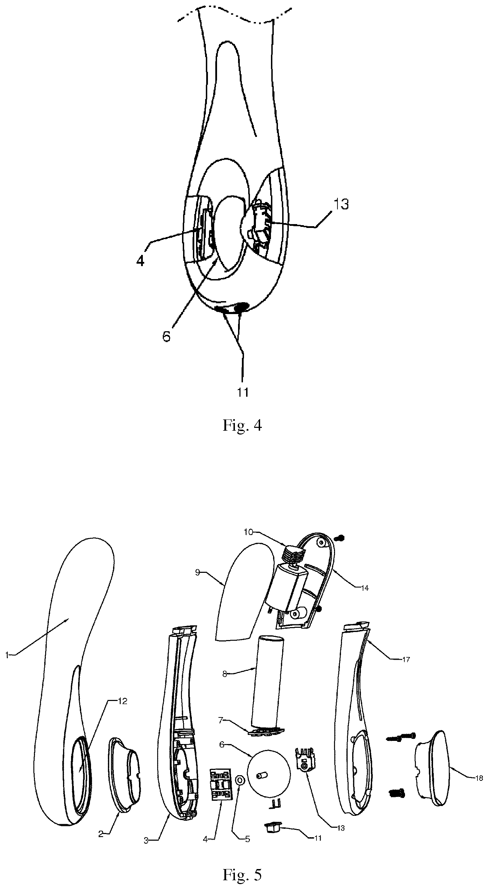

As shown Figs. 1 to 5, the present disclosure provides a wheel type sexual massage device. The massage device include a soft rubber leather sheath 1 made of soft material, a shell body disposed within the soft rubber leather sheath 1 through an mounting opening 12 located at a second end of the soft rubber leather sheath 1, a vibration motor 10, a roller 6, a circuit board 4 provided with a switch, and a wheel encoder 13. A first end of the soft rubber leather sheath 1 is a massaging head. The massaging head may be in the shape of a male sexual organ, or a shape of a teardrop, an ellipse, or a ball or other commonly used shape for massaging sexual sensitive area. The shell body is formed by attaching a first shell body member and a second shell body member through snapping or any other appropriate methods. In certain embodiments, the first shell body member is formed by attaching a top first shell body member 14 and a bottom first shell body member 17 through snapping or any other appropriate methods. The second shell body member is formed by attaching a top second shell body member 9 and a bottom second shell body member 3 through snapping or any other appropriate methods. The vibration motor 10 is disposed in the shell body closer to the first end. A rechargeable battery 8 may be disposed in the middle of the shell body. A wheel mechanism is disposed close to the second end of the shell body exposed to the mounting opening 12. The wheel mechanism include a roller 6, the circuit board 4 with the switch, and the wheel encoder 13. A rotating shaft of the roller 6 is disposed perpendicularly to the roller 6. The two ends of the rotating shaft are disposed to two shaft holes disposed close to the second end of the shell body. An elastic ring 5 is disposed between the axis and the shaft hole. The circuit board 4 provided with the switch is disposed to the back of a first end of the rotating shaft. A second end of the rotating shaft may be transmission connected to the wheel encoder 13. When the roller 6 is pressed, the first end of the rotating shaft presses on the switch of the circuit board 4 to switch on/off the vibration motor and/or change vibrating mode. In certain embodiments, the switch of the circuit board 4 is set to two levels. The first level is set to switch on the vibration motor 10. The second level is set to initiate intermittent vibrating mode. The vibration motor 10 is switched off by pressing the roller 6 for no less than three seconds. The vibration of the vibration motor 10 is adjusted and controlled through the wheel encoder 4 and the circuit board 4 provided with the switch by rotating the roller 6. In certain embodiment, a first supporting member 18 and a second supporting member 2 are disposed at the front and back of the roller 6, respectively. To charge the rechargeable battery 8, a magnetic charging mechanism 11 is disposed at the bottom of the soft rubber leather sheath 1.

## Claims

1. A wheel type sexual massage device, including:
a soft rubber leather sheath (1) with a first end and a second end,
a massaging head disposed on the first end of the soft rubber leather sheath (1),
a shell body formed by attaching a first shell body member and a second shell body member;
a vibration motor (10) disposed in the shell body close to the first end;
a mounting opening (12) disposed close to the second end of the soft rubber leather sheath (1), wherein the shell body is disposed in the soft rubber leather sheath (1) through the mounting opening (12); **characterised in that** a wheel mechanism is disposed in the shell body close to the second end and exposed to the mounting opening (12),
the wheel mechanism including a roller (6), a circuit board (4) provided with a switch, a wheel encoder (13) and a rotating shaft disposed perpendicularly to the roller (6) wherein the switch and the first end of the shaft are configured such that when the roller (6) is pressed,
the first end of the rotating shaft presses the switch of the circuit board, which in turn switches on/off the vibration motor (10) and/or changes vibrating mode; and
the vibration of the vibration motor (10) is controlled and adjusted through the wheel encoder (13) and the circuit board (4) provided with the switch by rotating the roller (6).

2. The massage device according to claim 1, **characterized in that**:
a top first shell body member (14) and a bottom first shell body member (17) form the first shell body member by attaching the top first shell body member (14) and the bottom first shell body member (17);
a top second shell body member (9) and a bottom second shell body member (3) form the second shell body member by attaching the top second shell body member (9) and the bottom second shell body member (3); and
a first supporting member (18) and a second supporting member (2) are disposed to the front and back of the roller (6), respectively to provide the rotation space for the roller (6).

3. The massage device according to claim 2, **characterized in that**:
a rechargeable battery (8) disposed at the middle of the shell body; and
a magnetic charging mechanism is disposed at the bottom of the soft rubber leather sheath (1).

4. The massage device according to claim 1, **characterized in that**:
two shaft holes are disposed close to the second end of the soft rubber leather sheath (1), and two ends of the rotating shaft are disposed in the two shaft holes.

5. The massage device according to claim 1, **characterized in that**:
an elastic ring (5) is disposed between the rotating shaft and the shaft hole, wherein the elastic ring (5) is deformed when a force is exerted on the rotating shaft to allow the rotating shaft to press on the circuit board and return to a non-deformed position to lift the rotating shaft from the circuit board when the force on the rotating shaft is removed.

6. The massage device according to claim 1, **characterized in that** the rotation of the roller (6) does not have an upper limit.

7. The massage device according to claim 1, **characterized in that** the wheel encoder (13) and the circuit board (4) of the wheel mechanism adjust the vibration strength of the vibration motor (10) digitally according to the rotation of the roller (6); and the wheel mechanism does not include a potentiometer.

8. The massage device according to claim 1, **characterized in that**
- one press on the roller (6) activates the switch of the circuit board (4) and makes the vibration motor (10) switch between two levels, including: a first level set to switch on the vibration motor (10), and a second level set to initiate an intermittent vibrating mode; and
- press on the roller (6) for a time duration longer than a preset threshold switches off the vibration motor (10).

## Patentansprüche

1. Eine rad-artige Sexualmassagevorrichtung, umfassend:
eine Weichkautschuk-Leder-Hülle (1) mit einem ersten Ende und einem zweiten Ende,
einen an dem ersten Ende der Weichkautschuk-Leder-Hülle (1) angeordneten Massagekopf,
einen Schalenkörper, der durch Verbinden eines ersten Schalenkörperelements und
eines zweiten Schalenkörperelements geformt wird;
einen in dem Schalenkörper nahe dem ersten Ende angeordneten Vibrationsmotor (10);
eine nahe einem zweiten Ende der Weichkautschuk-Leder-Hülle (1) angeordnete Befestigungsöffnung (12), wobei der Schalenkörper in der Weichkautschuk-Leder-Hülle (1) durch die Montageöffnung (12) angeordnet wird,
**dadurch gekennzeichnet, dass**
ein Radmechanismus in dem Schalenkörper nahe dem zweiten Ende angeordnet ist und in der Befestigungsöffnung (12) freigelegt ist,
der Radmechanismus
einen Roller (6), eine mit einem Schalter versehene Leiterplatte (4), einen Rad-Encoder (13), und eine senkrecht zum Roller (6) angeordnete drehende Welle umfasst, wobei der Schalter und das erste Ende der Welle so konfiguriert sind, dass wenn der Roller (6) gedrückt wird,
das erste Ende der drehenden Welle den Schalter der Leiterplatte drückt, welcher wiederum den Vibrationsmotor (10) an/ausschaltet und/oder den Vibrationsmodus ändert; und
die Vibration des Vibrationsmotors (10) durch den Rad-Encoder (13) und die mit dem Schalter versehene Leiterplatte (4) durch Drehen des Rollers (6) gesteuert und
eingestellt wird.

2. Massagevorrichtung nach Anspruch 1,
**dadurch gekennzeichnet, dass**
ein oberes erstes Schalenkörperelement (14) und ein unteres erstes Schalenkörperelement (17) durch Verbinden des oberen ersten Schalenkörperelements (14) und des unteren ersten Schalenkörperelements (17) das erste Schalenkörperelement bilden;
ein oberes zweites Schalenkörperelement (9) und ein unteres zweites Schalenkörperelement (3) durch Verbinden des oberen zweiten Schalenkörperelements (9) und des unteren zweiten Schalenkörperelements (3) das zweite Schalenkörperelement bilden; und
ein erstes Stützelement (18) und ein zweites Stützelement (2) jeweils an der Vorderseite und Rückseite des Rollers (6) angeordnet sind, um den Drehraum für den Roller (6) bereitzustellen.

3. Massagevorrichtung nach Anspruch 2,
**dadurch gekennzeichnet, dass**
eine wiederaufladbare Batterie (8) in der Mitte des Schalenkörpers angeordnet ist; und ein magnetischer Auflademechanismus am Boden der Weichkautschuk-Leder-Hülle (1) angeordnet ist.

4. Massagevorrichtung nach Anspruch 1,
**dadurch gekennzeichnet, dass**
zwei Wellenlöcher nahe dem zweiten Ende der Weichkautschuk-Leder-Hülle (1) angeordnet sind, und die beiden Enden der drehenden Welle in den beiden Wellenlöchern angeordnet sind.

5. Massagevorrichtung nach Anspruch 1,
**dadurch gekennzeichnet, dass**
ein elastischer Ring (5) zwischen der drehenden Welle und dem Wellenloch angeordnet ist, wobei der elastische Ring (5) verformt wird, wenn eine Kraft auf die drehende Welle ausgeübt wird, um zu ermöglichen, dass die drehende Welle auf die Leiterplatte drückt, und zu einer nicht-verformten Position zurückkehrt, um die drehende Welle von der Leiterplatte hochzuheben, wenn die Kraft auf die drehende Welle zurückgenommen wird.

6. Massagevorrichtung nach Anspruch 1,
**dadurch gekennzeichnet, dass**
die Drehung des Rollers (6) keine Obergrenze hat.

7. Massagevorrichtung nach Anspruch 1,
**dadurch gekennzeichnet, dass**
der Rad-Encoder (13) und die Leiterplatte (4) des Radmechanismus die Vibrationsstärke des Vibrationsmotors (10), entsprechend der Drehung des Rollers (6), digital einstellen; und dass der Radmechanismus keinen Potentiometer enthält.

8. Massagevorrichtung nach Anspruch 1,
**dadurch gekennzeichnet, dass**
- einmaliges Drücken des Rollers (6) den Schalter der Leiterplatte (4) betätigt und den Vibrationsmotor (10) veranlasst, zwischen zwei Levels zu umzuschalten, umfassend: ein erstes Level, das festgesetzt ist, um den Vibrationsmotor (10) einzuschalten, und ein zweites Level, das festgesetzt ist, um einen intermittierenden Vibrationsmodus zu veranlassen; und
- Drücken des Rollers (6) für eine Zeitdauer, die länger als ein vorbestimmter Schwellenwert ist, den Vibrationsmotor (10) ausschaltet.

## Revendications

1. Dispositif de massage sexuel de type à roue, comportant :
un fourreau en caoutchouc souple (1) avec une première extrémité et une seconde extrémité,
une tête de massage disposée sur la première extrémité du fourreau en caoutchouc souple (1),
un corps de coquille formé en attachant un premier organe de corps de coquille et un second organe de corps de coquille ;
un moteur de vibration (10) disposé dans le corps de coquille près de la première extrémité ;
une ouverture de montage (12) disposée près de la seconde extrémité du fourreau en caoutchouc souple (1), dans lequel le corps de coquille est disposé dans le fourreau en caoutchouc souple (1) à travers l'ouverture de montage (12) ; **caractérisé en ce que**
un mécanisme de roue est disposé dans le corps de coquille près de la seconde extrémité et exposé à l'ouverture de montage (12), le mécanisme de roue comportant un rouleau (6), une carte de circuit imprimé (4) pourvue d'un commutateur, un codeur de roue (13) et un arbre rotatif disposé perpendiculairement au rouleau (6), dans lequel le commutateur et la première extrémité de l'arbre sont configurés de sorte que, lorsque l'on appuie sur le rouleau (6), la première extrémité de l'arbre rotatif appuie sur le commutateur de la carte de circuit imprimé, qui à son tour active/désactive le moteur de vibration (10) et/ou change un mode de vibration ; et
la vibration du moteur de vibration (10) est commandée et ajustée par le codeur de roue (13) et la carte de circuit imprimé (4) pourvue du commutateur en faisant tourner le rouleau (6).

2. Dispositif de massage selon la revendication 1, **caractérisé en ce que** :
un premier organe de corps de coquille supérieur (14) et un premier organe de corps de coquille inférieur (17) forment le premier organe de corps de coquille en attachant le premier organe de corps de coquille supérieur (14) et le premier organe de corps de coquille inférieur (17) ;
un second organe de corps de coquille supérieur (9) et un second organe de corps de coquille inférieur (3) forment le second organe de corps de coquille en attachant le second organe de corps de coquille supérieur (9) et le second organe de corps de coquille inférieur (3) ; et
un premier organe de support (18) et un second organe de support (2) sont disposés à l'avant et à l'arrière du rouleau (6), respectivement, pour fournir l'espace de rotation pour le rouleau (6).

3. Dispositif de massage selon la revendication 2, **caractérisé en ce que** :
une batterie rechargeable (8) étant disposée au milieu du corps de coquille ; et
un mécanisme de charge magnétique est disposé au fond du fourreau en caoutchouc souple (1).

4. Dispositif de massage selon la revendication 1, **caractérisé en ce que** :
deux trous d'arbre sont disposés près de la seconde extrémité du fourreau en caoutchouc souple (1), et deux extrémités de l'arbre rotatif sont disposées dans les deux trous d'arbre.

5. Dispositif de massage selon la revendication 1, **caractérisé en ce que** :
une bague élastique (5) est disposée entre l'arbre rotatif et le trou d'arbre, dans lequel la bague élastique (5) est déformée lorsqu'une force est exercée sur l'arbre rotatif pour permettre à l'arbre rotatif d'appuyer sur la carte de circuit imprimé et de revenir à une position non déformée pour lever l'arbre rotatif de la carte de circuit imprimé lorsque la force sur l'arbre rotatif est enlevée.

6. Dispositif de massage selon la revendication 1, **caractérisé en ce que**
la rotation du rouleau (6) n'a pas de limite supérieure.

7. Dispositif de massage selon la revendication 1, **caractérisé en ce que**
le codeur de roue (13) et la carte de circuit imprimé (4) du mécanisme de roue ajustent numériquement l'intensité de vibration du moteur de vibration (10) selon la rotation du rouleau (6) ; et le mécanisme de roue ne comporte pas de potentiomètre.

8. Dispositif de massage selon la revendication 1, **caractérisé en ce que**
- un appui sur le rouleau (6) active le commutateur de la carte de circuit imprimé (4) et amène le moteur de vibration (10) à commuter entre deux niveaux, incluant : un premier niveau réglé pour activer le moteur de vibration (10), et un second niveau réglé pour déclencher un mode de vibration intermittent ; et
- un appui sur le rouleau (6) pendant une durée plus longue qu'un seuil préréglé désactive le moteur de vibration (10).
